# FASCICULE DE BREVET EUROPEEN

(11) **EP 3 326 108 B1**
(45) Date de publication et mention de la délivrance du brevet: **25.03.2020**
(21) Numéro de dépôt: 16744542.8
(22) Date de dépôt: 20.07.2016
(51) Int. Cl.: G06K 7/08, G06K 7/00

(54) **LECTEUR DE CARTE COMPACT**
KOMPAKTKARTENLESER
COMPACT CARD READER

(30) Priorité: 20.07.2015 FR 1556838
(43) Date de publication de la demande: 30.05.2018
(73) Titulaire: Roam Data, Inc., Wilmington, DE 19801 (US)
(72) Inventeur: ROTSAERT, Christopher, 59290 Wasquehal (FR)
(74) Mandataire: Vidon Brevets & Stratégie
(86) Numéro de dépôt international: PCT/IB2016/054326
(87) Numéro de publication internationale: WO 2017/013606

(56) Documents cités:
- WO-A1-2015/015661
- FR-A1- 2 997 533
- FR-A3- 2 805 636
- US-A1- 2003 089 773
- US-A1- 2014 131 442

## Description

### 1. Domaine

La technique proposée se rapporte au domaine des terminaux de paiement. Plus particulièrement, la technique proposée se rapporte au domaine des terminaux de paiement compacts. L'invention se rapporte plus spécifiquement au domaine des terminaux de paiement connectables à des terminaux de communication. Plus spécifiquement encore, la technique se rapporte à une architecture de terminal de paiement intégrant un circuit imprimé (PCB, de l'anglais pour « printed Circuit Board ») et intégrant une tête de lecture magnétique.

### 2. Art Antérieur

Les cartes de paiement sont largement utilisées dans le monde pour effectuer des transactions financières, et plus spécifiquement des transactions de paiement, tant physiquement chez un commerçant, qu'en ligne, par l'intermédiaire d'une application dédiée. Une carte de paiement est souvent équipée d'une bande magnétique et/ou une puce électronique. La bande magnétique et la puce électronique permettent de réaliser des transactions de paiement. La bande magnétique contient des données qui sont lues à l'aide d'une tête magnétique intégrée dans le terminal de paiement. La bande magnétique contient en réalité trois bandes magnétiques parallèles distinctes, chacune comprenant des données spécifiques. La puce électronique, quant à elle, comprend généralement un processeur, une mémoire; elle effectue un traitement conjoint et sécurisé avec le terminal de paiement en vue de l'exécution de la transaction. Ainsi, lors de son utilisation, la carte est soit insérée dans un lecteur de carte équipée d'une tête magnétique ou inséré dans un lecteur, dit lecteur CAM, comprenant un connecteur de carte à puce.

Pour faciliter les paiements par carte bancaire et permettre aux utilisateurs de disposer de nouveaux moyens de paiement, des lecteurs amovibles de cartes ont été proposés sur le marché. C'est par exemple le cas du lecteur de cartes magnétiques de la société *Amazon*™ avec le produit *« Amazon Local Register™ »* et le lecteur de carte associé. Un tel lecteur de carte est par exemple décrit dans le document USD711876. D'autres lecteurs de ce type existent. Ces lecteurs amovibles sont par exemple équipés de module de communication et peuvent être apparié avec un dispositif de communication afin de communiquer avec les serveurs de paiement à distance. Pour les raisons de portabilité et d'esthétique, il est intéressant de diminuer la taille des lecteurs amovibles, en particulier lorsque de tels lecteurs sont aptes à être appariés avec un dispositif de communication compact, par exemple de type smartphone. En effet, avec le développement de la technique, l'épaisseur des dispositifs de communication (téléphone mobile, tablette etc.) est aujourd'hui de l'ordre de moins de dix millimètres. Il est souhaitable que l'épaisseur des lecteurs amovibles soit proche de celui des dispositifs de communication. Or actuellement, les lecteurs de l'état de la technique souffrent de deux problème importants : le premier problème est lié au fait que les interfaces de paiement de ces dispositifs compacts sont limitées à la lecture de cartes magnétiques. Parfois, une interface de type sans contact (NFC) est également présente. Cependant, le lecteur de la puce de la carte de paiement n'est généralement pas possible. Le deuxième problème est lié à la taille du produit et plus particulièrement à son épaisseur : comme cela est visible dans le document USD711876, le lecteur amovible possède une épaisseur importante. Or le lecteur du document USD711876 n'intègre même pas de lecteur de carte à puce. Une autre société commercialise un lecteur amovible, se branchant sur la prise jack d'un dispositif de communication mobile qui comprend une fente pour la lecture de carte à puce et une fente pour la lecture de carte magnétique. Un tel dispositif est décrit dans le document WO2013074499. De plus, le document FR 2 805 636 A3 divulgue un lecteur de carte à piste magnétique et de carte à puce. La tête magnétique est placée dans un trou traversant du support du lecteur.

Le document US 2014/0131442 A1 divulgue un lecteur hybride de carte à piste magnétique et de carte à puce.

Le document WO 2015/015661 A1 divulgue un lecteur combiné de carte à puce et de carte à puce.

Enfin, le document US 2003/0089773 A1 divulgue un lecteur de carte à piste magnétique. La tête magnétique est placée dans une cavité et reliée à la carte de circuit imprimé.

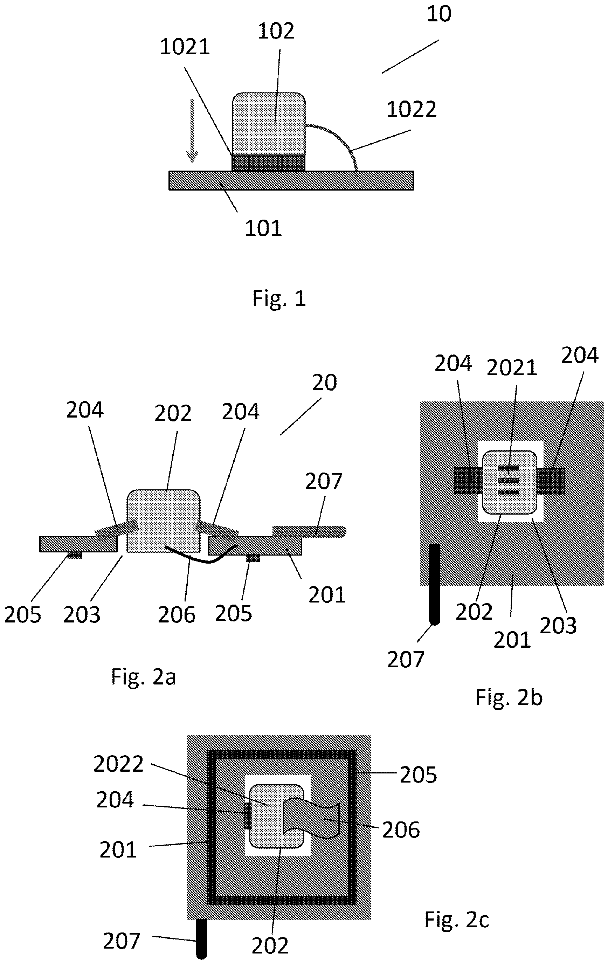

Dans un exemple de l'état de la technique, illustré en relation avec la figure 1, le lecteur de carte 10 comprend une carte de circuit imprimé (PCB) 101 et une tête magnétique 102. La tête magnétique 102 est posée sur un élément flexible de débattement 1021, qui est lui-même fixé sur la carte de circuit imprimé L'élément flexible de débattement 1021 permet à tête magnétique 102 de subir un mouvement en direction de la carte de circuit imprimé lorsqu'une carte magnétique passe sur la tête magnétique. Cela permet d'assurer un contact optimal entre la bande magnétique de la carte et la tête de lecture. Par ailleurs, une liaison 1022 est établie entre la carte de circuit imprimée 101 et la tête magnétique 102 pour transmettre les signaux électriques lus par la tête magnétique. Cette liaison est par exemple un circuit imprimé flexible. L'épaisseur du lecteur de carte 10 est contrainte par la somme de l'épaisseur de la carte de circuit imprimé 101 (au moins de deux millimètres) et la hauteur de la tête magnétique 102 (de l'ordre de dix millimètres) et l'élément flexible de débattement 1021. Par conséquent, l'épaisseur minimale des lecteurs de l'état de la technique est au moins de douze millimètres sans même compter la hauteur d'une fente d'insertion de carte et l'épaisseur du capot en plastique nécessaire à la protection du dispositif. Cette épaisseur des lecteurs de carte est ainsi plus grande que celle d'un dispositif de communication mobile moderne (de l'ordre de 10mm). Cette différence importante d'épaisseur apporte d'une part un impact esthétique négatif sur le dispositif apparié et d'autre part un inconvénient sur la portabilité du dispositif apparié.

Il est donc nécessaire de disposer d'une solution qui permette de diminuer l'épaisseur des lecteurs amovibles tout en intégrant une interface de paiement de type carte à puce et une interface de type paiement carte magnétique.

### 3. Résumé

La présente divulgation permet de résoudre au moins certains des problèmes posés par les antennes de communication sans contact de l'art antérieur. Plus particulièrement, la technique proposée se rapporte à un lecteur de carte comprenant une carte de circuit imprimé, une tête magnétique et un connecteur de carte à puce. Selon la présente technique, que ladite tête magnétique et ledit connecteur de carte à puce partagent un volume opératoire commun de lecture de carte.

Ainsi, il est possible de réduire de manière importante le volume d'un dispositif qui intègre le lecteur de cartes.

La carte de circuit imprimé comprend une ouverture au sein de laquelle ladite tête magnétique est mobile entre une position de repos, dans laquelle la tête magnétique n'est pas sollicitée, et une position de lecture, dans laquelle la tête magnétique est déplacée dans ladite ouverture.

Ainsi, l'épaisseur du lecteur de carte comprenant cette carte de circuit imprimé et une tête magnétique est réduite d'une manière significative. En effet, la tête magnétique est mobile entre une position de repos (dans laquelle la tête n'est pas mobilisée), et une position de lecture dans laquelle la tête est enfoncée dans l'ouverture. En fonction des modes de réalisation, en position de lecture, une portion plus ou moins significative de la tête magnétique prend place dans un volume de lecture dédié au déplacement et à la lecture d'une carte à puce ; dans d'autres modes de réalisation, la surface supérieure de lecture de la tête magnétique est située du même côté de a carte de circuit imprimée, permettant alors de ne nécessiter qu'une seule fente dans le lecteur de carte.

Selon un mode de réalisation particulier, en position de lecture, ladite tête magnétique occupe une partie du volume dédié au déplacement d'une carte à puce.

Selon une caractéristique particulière, en position de lecture, une partie de la tête magnétique prend place au sein d'une enceinte sécurisée de protection dudit connecteur de carte à puce.

Les signaux sensibles sont transmis, de la surface inférieure de la tête magnétique au lecteur de carte par l'intermédiaire du circuit imprimé flexible. Les attaques sont réalisées par l'introduction des sondeurs dans la zone autour de la surface inférieure de la tête magnétique et le circuit imprimé flexible. L'enceinte sécurisée autour de cette zone permet de détecter les attaques et améliorer le niveau de sécurité du lecteur de carte.

Selon un mode de réalisation particulier, ladite tête magnétique et ledit connecteur de carte à puce partagent au moins en partie une même fente d'insertion de carte.

Selon un mode de réalisation particulier, le lecteur de carte comprend un circuit imprimé flexible, ledit circuit imprimé flexible raccordant ladite tête magnétique à ladite carte de circuit imprimé.

Ainsi, la tête magnétique peut se déplacer tout en gardant une connexion avec la carte de circuit imprimé. Par ailleurs, lorsqu'une portion plus ou moins significative de la tête magnétique prend place dans un espace de lecture dédié au connecteur de carte à puce, en position lecture, le circuit imprimé flexible prend également place dans cette enceinte sécurisée. On réalise alors des gains en épaisseur significatifs, permettant de réduire l'épaisseur du lecteur de carte à celle d'un terminal de communication moderne classique (de l'ordre de 10 mm).

Selon un mode de réalisation particulier, le lecteur de carte comprend au moins un élément de support maintenant ladite tête magnétique dans l'ouverture de ladite carte de circuit imprimé qui est conformé pour permettre une translation de la tête magnétique dans ladite ouverture selon une direction perpendiculaire à ladite carte de circuit imprimé.

Ainsi, la tête magnétique peut être légèrement poussée vers le bas lors de passage d'une carte. Le contact entre la tête magnétique et la carte devient plus étroit grâce à la force de rappel générée par les éléments de support.

Selon une caractéristique particulière, ladite surface supérieure de contact dudit connecteur et ladite surface supérieure de lecture de ladite tête magnétique possèdent des sens de lectures opposés.

Ainsi, les cartes magnétiques et cartes à puce sont lues respectivement dans les deux côtés du lecteur de carte.

Selon un mode de réalisation particulier, ladite surface supérieure de contact dudit connecteur et ladite surface supérieure de lecture de ladite tête magnétique possèdent un même sens de lecture.

Ainsi, les cartes magnétiques est cartes à puce sont lues dans le même coté du lecteur de carte. Le lecteur de carte est compatible avec deux type des cartes alors que l'épaisseur du lecteur de carte reste le même que celui du lecteur de carte comprenant seulement une tête magnétique.

Selon une caractéristique particulière, l'orientation de la lecture d'une carte à puce est perpendiculaire à l'orientation de la lecture d'une carte magnétique. Il est ainsi possible d'introduire la carte magnétique dans un sens de lecture donné, et la carte à puce dans un sens de lecture perpendiculaire : cela évite la nécessité de détecter le type de carte à insérer.

Selon un autre aspect, la présente technique se rapporte également à un terminal de paiement amovible. Un tel terminal de paiement comprend un lecteur de carte selon un quelconque des modes de réalisation précédents. Selon un autre aspect, la présente technique se rapporte également à un terminal de paiement, classique, mais compact. Un tel terminal de paiement comprend un lecteur de carte selon un quelconque des modes de réalisation précédents.

### 4. Figures

D'autres caractéristiques et avantages apparaîtront plus clairement à la lecture de la description suivante d'un mode de réalisation particulier de la présente technique, donné à titre de simple exemple illustratif et non limitatif, et des dessins annexés, parmi lesquels :
- la figure 1 est une vue en coupe d'un lecteur de carte inséré dans un dispositif de lecture amovible de l'état de la technique ;
- la figure 2a est une vue en coupe d'un lecteur de carte selon un premier mode de réalisation ;
- la figure 2b est une vue de dessus du lecteur de carte selon le premier mode de réalisation ;
- la figure 2c est une vue de dessous du lecteur de carte selon le premier mode de réalisation ;
- la figure 3a est une vue en coupe d'un lecteur de carte selon un deuxième mode de réalisation ;
- la figure 3b est une vue en coupe du lecteur de carte de 3a lors de lecture d'une carte magnétique ;
- la figure 4a une vue en coupe d'un lecteur de carte selon un troisième mode de réalisation ;
- la figure 4b-1 est une vue de dessus du circuit imprimé lors de lecture d'une carte à puce ;

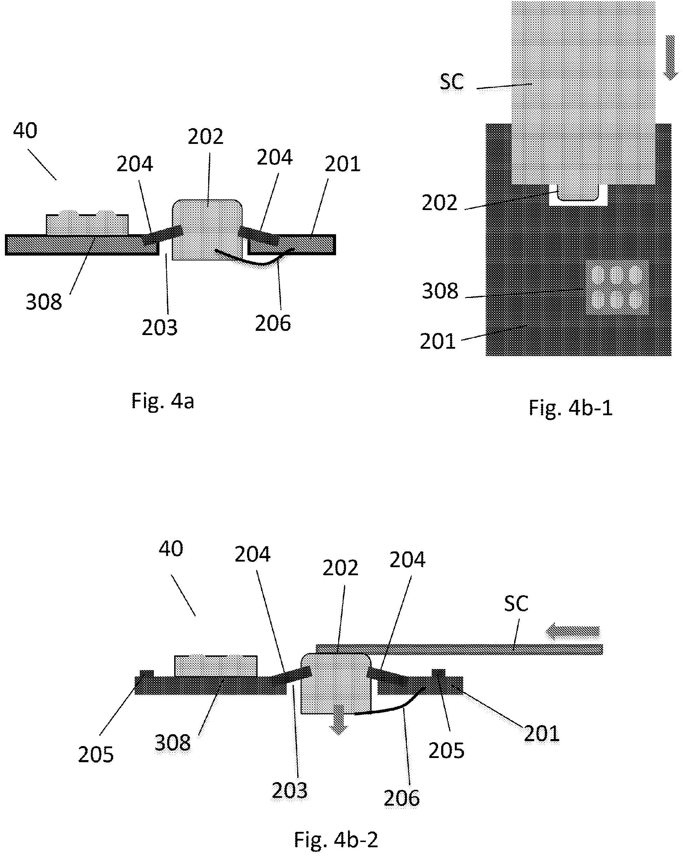

- la figure 4b-2 est une vue en coupe du circuit imprimé de la figure 4b lors de lecteur d'une carte à puce ;

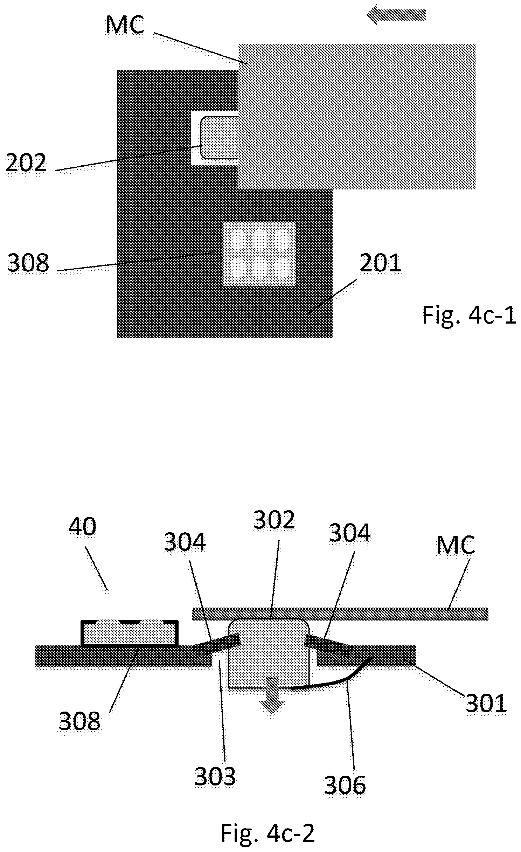

- la figure 4c-1 est une vue de dessus du circuit imprimé lors de lecture d'une carte magnétique ;
- la figure 4c-2 est une vue en coupe du circuit imprimé de la figure 4b lors de lecteur d'une carte magnétique ;

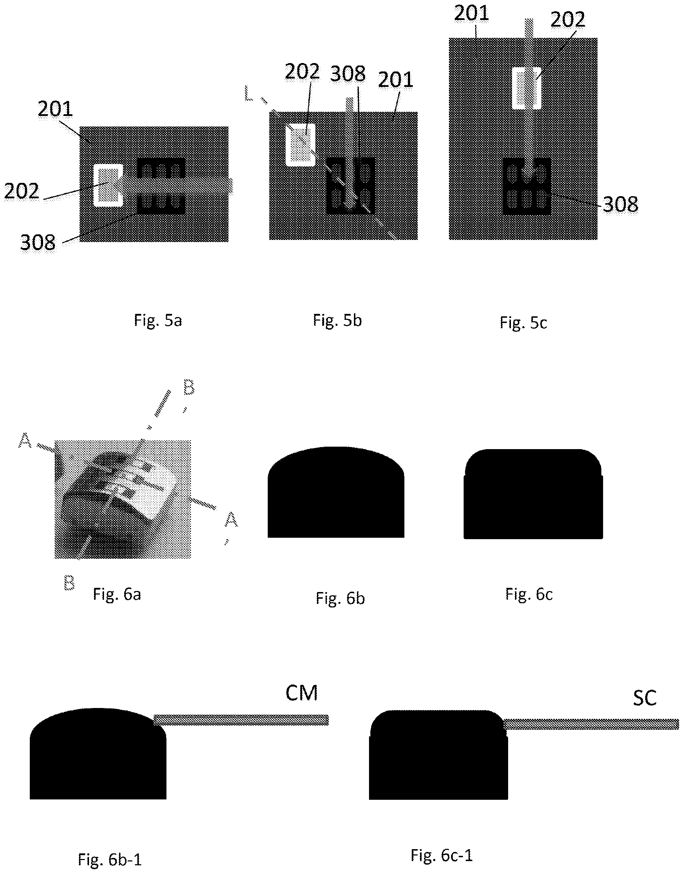

- les figures 5a, 5b et 5c sont trois dessins schématiques des positionnements de la tête magnétique et le connecteur de carte à puce des lecteurs du lecteur de carte selon le deuxième ou troisième mode de réalisation ;
- la figure 6a illustre une tête magnétique de l'état de la technique ;
- la figure 6a-1 illustre le passage d'une carte magnétique dans le cas d'utilisation illustré en relation avec la figure 4c-1 ;
- la figure 6b est une vue en coup de la tête magnétique de la figure 6a dans le sens de passage (A-A') de la carte magnétique ;
- la figure 6c est une vue en coup de la tête magnétique de la figure 6a dans le sens de passage (B-B') de la carte magnétique ;
- la figure 6b-1 illustre le passage d'une carte magnétique dans le cas d'utilisation illustré en relation avec la figure 4b-1 ;
- la figure 6c-1 illustre le passage d'une carte magnétique dans le cas d'utilisation illustré en relation avec la figure 4b-1 ;

### 5. Description de l'invention

Comme explicité préalablement, la technique proposée vise à diminuer l'épaisseur des terminaux de paiement compacts et amovibles comprenant une tête de lecture magnétique et un connecteur de carte à puce afin d'améliorer l'esthétique et la portabilité de ces terminaux. D'une manière générale, la technique proposée vise également à permettre l'intégration simplifiée d'une tête de lecture magnétique et d'un connecteur de carte à puce au sein de toute architecture de terminal de paiement, qu'il soit amovible ou non. Par ailleurs, un objet de la technique est également de proposer une architecture qui puisse faciliter la certification d'un tel terminal. Ainsi, la technique peut être appliquée à la fabrication de tout type de terminal, dès qu'une contrainte de compacité et/ou de transport doit être satisfaite. Par exemple des terminal d'identification, dans des aéroports, des chambres d'hôtel pourraient tout à fait utiliser les principes décrits dans la présente.

Le principe général de la technique proposée consiste à proposer un lecteur de carte, formé d'un circuit imprimé et d'une tête de lecture magnétique et d'un connecteur de carte à puce. Selon la technique proposée, l'objectif est atteint en conformant la carte de circuit imprimé afin qu'elle comprenne une ouverture apte à recevoir une partie d'une tête magnétique. Ainsi, la somme de l'épaisseur de la carte de circuit imprimé et de la hauteur de la tête magnétique est réduite d'une valeur au moins égale à l'épaisseur de la carte de circuit imprimé, voire plus comme cela est explicité par la suite dans différents modes de réalisation. L'utilisation d'un tel lecteur de carte n'est pas limitée dans la fabrication des terminaux de paiement. Il peut être utilisé dans tout type de dispositif comprenant une tête magnétique et nécessitant une épaisseur réduite. La technique proposée peut être en particulier implémentée dans des lecteurs de cartes magnétiques offrant un accès à un bien ou un service, tel que les lecteurs de carte magnétique des chambres d'hôtel. Dans la suite on expose différent modes de réalisation de la technique. Sur les figures, la capot et enveloppes externes ne sont pas représentés pour plus de clarté dans les dessins.

Les figures 2a, 2b et 2c illustrent un lecteur de carte 20 selon un premier mode de réalisation de l'invention. Le lecteur de carte 20 comprend une carte de circuit imprimé 201, une tête de lecture magnétique 202 (également appelée tête magnétique). Une partie de la tête magnétique 202 est placé dans une ouverture 203 pratiquée sur la carte de circuit imprimé 201. De préférence, la surface inférieure 2022 (la base) de la tête magnétique 202 est sensiblement parallèle au plan de la carte de circuit imprimé 201. Des éléments de support 204 maintiennent la tête magnétique 202 dans l'ouverture 203. De préférence, les éléments de support 204 ont une certaine élasticité et sont configurés de sorte à permettre une translation de la tête magnétique dans l'ouverture de la carte de circuit imprimé selon une direction perpendiculaire au plan de la carte de circuit imprimé 201. Lorsqu'une carte magnétique passe au-dessus de la tête magnétique 202 afin d'être lue, une force est exercée sur la tête magnétique 202 par la carte. Les éléments de support 204 sont déformés et la tête magnétique 202 se déplace au sein de l'ouverture 203. La déformation des éléments de support 204 génère, en retour, une force élastique sur la tête magnétique 202 (vers la bande magnétique de la carte magnétique), et permet d'assurer un contact étroit entre la surface supérieure de lecture 2021 de la tête magnétique 202 et la ou les bandes magnétiques de la carte magnétique. La tête magnétique 202 peut être connectée à la carte de circuit imprimé par l'intermédiaire d'un circuit imprimé flexible 206 qui peut alimenter la tête magnétique 202 et transmettre des signaux à la carte de circuit imprimée 201. De préférence, comme illustré en relation avec la figure 2c, la surface inférieure 2022 de la tête magnétique 202 et le circuit imprimé flexible 206 sont entourés par une enceinte sécurisée 205 disposée sur la surface opposée de la carte de circuit imprimé 201. Cette enceinte sécurisée 205 permet de détecter et/ou d'empêcher les intrusions dans la zone sensible du lecteur de carte. La sécurité du lecteur est ainsi renforcée. Bien entendu, sur les figures, l'enceinte 205 n'est pas représentée en hauteur et configuration réelle. Par ailleurs, l'enceinte en elle-même est recouverte d'un capotage, non également non représenté, qui permet de définir une zone sécurisée au sein de laquelle il est complexe d'introduire un dispositif espion. On rappelle en effet que les terminaux de paiement, qu'ils se présentent sous la forme de dispositifs autonomes (comme cela est généralement le cas) ou qu'ils se présentent sous la forme de dispositifs compacts devant être appariés à un autre terminal (comme c'est le cas dans le mode de réalisation présenté ici), sont des dispositifs qui traitent des données sensibles. De telles données sensibles sont par exemple des identifiant bancaires. Or ces données sensibles attisent la convoitise de personnes mal intentionnées qui souhaitent subtiliser ces données. Il est donc nécessaire de disposer de fonctions de protection. Dans l'exemple de l'art antérieur présenté en figure 1, des protections particulières doivent être mises en œuvre autour de la tête magnétique afin de s'assurer que celle-ci ne fait pas l'objet d'une attaque. Dans la technique telle qu'illustrée aux figures 2a à 2c, cela n'est pas le cas : on profite en effet d'une enceinte existante, placée au dos de la carte de circuit imprimé (enceinte qui est destinée à protéger les données sensibles du dispositif), pour d'une part offrir une possibilité de débattement à la tête magnétique (et ainsi réduire l'épaisseur du dispositif) et d'autre part pour protéger les signaux sensibles qui sortent de la tête magnétique (en s'assurant que le flex de transmission des signaux de la tête magnétique se trouve à l'intérieur de l'enceinte). Il n'est donc pas possible d'atteindre ce flexible sans tenter de percer l'enceinte sécurisée, ce qui rend la tâche nettement plus complexe. Ainsi, cette technique, outre le fait qu'elle résout les problèmes précédemment mentionnés, permet en outre d'augmenter la sécurité des dispositifs out en diminuant leur cout de fabrication car il n'est dès lors plus nécessaire de prévoir des dispositifs spécifiques pour protéger la tête magnétique. Par ailleurs, cette technique permet d'obtenir une certification de sécurité (par exemple une certification PCI) de manière beaucoup plus simple et rapide que les dispositifs antérieurs : en effet, parmi les tests réalisés pour obtenir une certification, des tests portent spécifiquement sur la sécurisation des données transitant par la tête magnétique. Dans ce mode de réalisation, dans la mesure où ces données transitent au sein de l'enceinte sécurisée, elles sont beaucoup moins accessibles que dans les dispositifs de l'art antérieur. On note que l'enceinte sécurisée (dont la description n'est pas l'objet de la présent), est utile lorsque la technique est mise en œuvre pour un terminal qui nécessite des mesures de protection particulières (terminal de paiement, terminal d'identification). Ce n'est pas nécessairement le cas dans le cadre d'un terminal standard tel qu'un lecteur d'accès à une chambre d'hôtel par exemple.

Dans ce mode de réalisation, la carte de circuit imprimé peut comprendre aussi un connecteur externe 207 (jack comme dans le document USD711876 ou dans le document WO2013074499, mais également USB, Mini USB ou Micro USB, ces derniers présentant, par rapport au connecteur jack, l'avantage de permettre des échanges de données plus importants avec le dispositif de communication mobile et de permettre une transmission d'énergie vers le terminal de paiement). Ainsi, le lecteur de carte (par exemple, un terminal de paiement amovible) peut être connecté avec un autre dispositif (par exemple, un dispositif de communication mobile comme un smartphone). Bien étendu, le lecteur de carte proposé peut être implémenté dans tout type de dispositif nécessitant une tête magnétique et devant être compact. Le connecteur externe 207 est ainsi optionnel.

La technique proposée concerne aussi un lecteur de carte pour les dispositifs hydrides qui peut lire à la fois des cartes à bande magnétiques et des cartes à puce (également appelées « smartcard »).

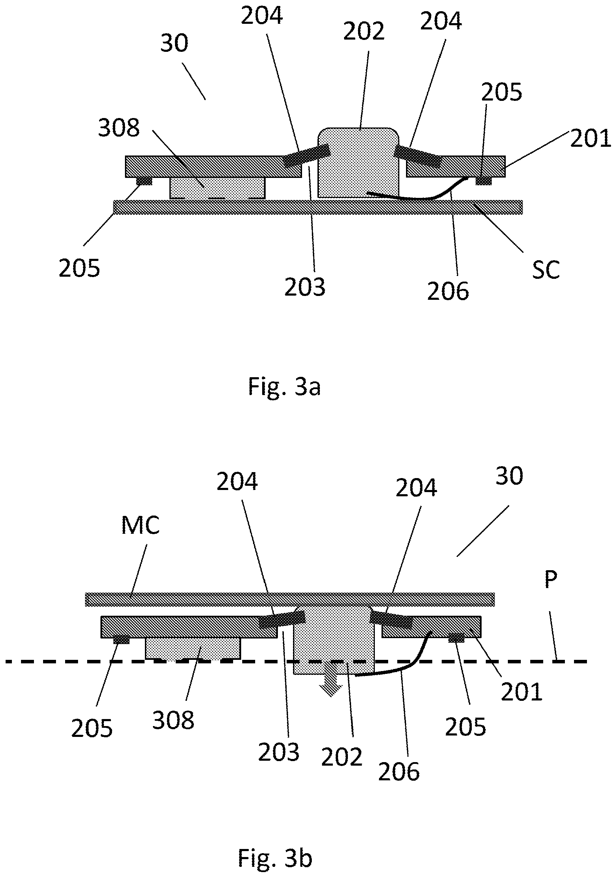

Les figures 3a et 3b illustrent un lecteur de carte 30 selon un deuxième mode de réalisation. Les références numériques se rapportant aux éléments présents dans le premier mode de réalisation sont identiques dans ce deuxième mode de réalisation. Le lecteur de carte 30 comprend une carte de circuit imprimé 201, une tête magnétique 202. Il comprend également un connecteur de carte à puce 308, et permet de lire les cartes magnétiques (MC) et les cartes à puce (SC). L'épaisseur d'un tel connecteur de carte à puce 308 est moins grande que celle de la tête magnétique 202. Ce connecteur de carte à puce 308 peut être directement soudé sur la surface inférieure de la carte de circuit imprimé 201, comme représenté en figure 3a et 3b. La surface supérieure de contact (la surface qui touche la carte à puce) du connecteur 308 s'oriente vers le bas, alors que la surface supérieure de lecture de la tête magnétique 202 s'oriente vers le haut (position relative sur ces deux figures). Les orientations du connecteur 308 et de la tête magnétique sont ainsi opposées : le plan qui est utilisé pour définir cette opposition est celui de la carte de circuit imprimé 201. La tête magnétique 202 est placée dans l'ouverture 203 de la carte de circuit imprimé 201. Des éléments de support 204 maintiennent la tête magnétique 201 dans l'ouverture 203 la carte de circuit imprimé 201. De préférence, les éléments de support 204 ont une certaine élasticité et sont configurés de sorte de permettre une translation de la tête magnétique dans l'ouverture de la carte de circuit imprimé selon une direction perpendiculaire à la carte de circuit imprimé, comme dans le premier mode de réalisation. Comme illustré en relation avec la figure 3b, lorsqu'une carte magnétique (MC) passe au-dessus de la tête magnétique 202, une force vers le bas est exercée sur la tête magnétique 202. Les éléments de support 204 se sont déformés et la base de la tête magnétique 202 se déplace vers le bas, dans l'enceinte sécurisée, à l'endroit où est normalement positionnée la carte à puce lorsque celle-ci est utilisée. La déformation des éléments de support 204 génèrent une force élastique sur la tête magnétique 202 vers le haut (vers la bande magnétique de la carte magnétique), et permet d'assurer un contact étroit entre la surface supérieure de lecture de la tête magnétique 202 et la bande magnétique de la carte magnétique (MC). La tête magnétique 202 est connectée à la carte de circuit imprimé par l'intermédiaire d'un circuit imprimé flexible 206 qui peut alimenter la tête magnétique 202 et transmettre des signaux. Dans ce mode de réalisation, le connecteur de carte à puce 308, la base 2022 de la tête magnétique 202 et le circuit imprimé flexible 206 sont entourés par une enceinte sécurisée 205 disposée sur la surface inférieure de la carte de circuit imprimé 201. Cette enceinte sécurisée 205 permet de détecter et/ou d'empêcher les intrusions dans la zone sensible du lecteur de carte. La sécurité du lecteur de cartes hydride est ainsi renforcée, comme dans le premier mode de réalisation. Une différence peut tout de même être notée : le capotage, qui permet de fermer l'enceinte sécurisée 205, en lui aussi muni d'une ouverture autorisant la puce de la carte à puce à entrer en contact avec le connecteur. Plus spécifiquement, dans ce mode de réalisation, le capotage est un lecteur de carte à puce (également appelé lecteur CAM). Dans ce mode de réalisation, ce capotage est donc sécurisé.

Selon ce deuxième mode de réalisation, la base de la tête magnétique 202 peut dépasser la surface inférieure de la carte de circuit imprimé 201 au moins jusqu'au plan (P) de la surface supérieure de contact du connecteur de carte à puce 308 (voire plus, comme indiqué sur la figure 3b) en fonction de la distance laissée libre entre le connecteur de carte à puce 308 et le capotage. Ainsi, par rapport à la solution de l'art antérieur selon laquelle la tête magnétique est montée sur la carte de circuit imprimé 201 (directement ou indirectement par l'intermédiaire d'un amortisseur), la solution selon ce deuxième mode de réalisation permet de diminuer la hauteur du lecteur de carte 30 d'une valeur (maximum) qui est sensiblement égale à la somme de l'épaisseur de la carte de circuit imprimé 201 et l'épaisseur du connecteur de carte à puce 308. En effet, dans la position initiale (cf. la figure 3a) de la tête magnétique 202 (illustrée dans la figure 3a), la base de la tête magnétique 202 ne peut pas dépasser le plan de la surface supérieure de contact du connecteur de carte à puce 308. Si un tel dépassement était mis en œuvre, l'insertion d'une carte à puce (SC) serait bloquée par la partie base de la tête magnétique 202. Toutefois, lors de la lecture d'une carte magnétique (MC), la carte magnétique (MC) pousse la tête magnétique 202 vers le bas et la surface inférieure de la tête magnétique 202 peut dépasser du plan (P) de la surface de lecture du connecter 308 de carte à puce (cf. la figure 3b), car ce dépassement est temporaire (la tête magnétique 202 va retourner dans sa position initiale une fois que la carte magnétique soit retirée, grâce à la force de rappel générée par la déformation des éléments de support 204). Ceci est possible par ailleurs car il n'est pas envisagé de permettre simultanément une lecture d'une carte magnétique et une lecture de carte à puce.

Les figures 4a, 4b-1, 4b-2, 4c-1 et 4c-2 présentent un autre mode de réalisation, dans lequel l'orientation de la tête de lecture magnétique et l'orientation du connecteur de carte à puce sont identiques. De même que précédemment, les références numériques correspondant à des éléments présents dans les figures précédentes sont conservées à l'identique. L'avantage procuré par ce mode de réalisation est de ne pas avoir besoin de deux fentes distinctes pour effectuer la lecture : la même fente peut être utilisée à la fois pour lire une carte à puce et à la fois pour lire une carte magnétique. Ceci permet encore de réduire l'épaisseur du dispositif car il n'est dès lors pas nécessaire de disposer de pièces en plastiques spécifiques pour créer deux fentes d'introduction de deux types de carte différentes. La figure 4a est une vue en coupe d'un lecteur de carte hybride 40 selon ce troisième mode de réalisation. Le connecteur de carte à puce 308 est directement soudé sur la surface supérieure due la carte de circuit imprimé 201. La surface supérieure de contact (la surface qui touche la carte à puce) du connecteur 308 et la surface supérieure de lecture de la tête magnétique 202 s'orientent dans la même direction (vers le haut sur les figures). Lors d'un passage d'une carte à puce (SC), la carte à puce (SC) touche d'abord la tête magnétique 202, laquelle effectue un mouvement de translation pour être dégagée vers le bas comme illustrée en relation avec les figures 4b-1 et 4b-2. Le contact entre la carte à puce (SC) et la tête magnétique 202 permet, dans ce mode de réalisation, de décharger l'électricité statique de la carte à puce (SC) avant que celle-ci soit lue par le connecteur de carte à puce 308.

La figure 4c-1 est une vue de dessus de la carte de circuit imprimé 201 lors d'un passage d'une carte magnétique (MC). La figure 4c-2 est une vue en coupe de la figure 4c-1. Lors du passage de la carte magnétique (MC), la carte magnétique (MC) pousse la tête magnétique 202 vers le bas et la bande magnétique de la carte (MC) glisse sur la surface supérieure de lecture de la tête magnétique 202. Dans ce mode de réalisation, la direction de passage de la carte magnétique est différente de celle de la carte à puce. Par conséquence, la carte magnétique (MC) n'entre pas dans la zone du connecteur de carte à puce 308.

Le choix des positions de la tête magnétique 202 et le connecteur de carte à puce 308 sur les circuits PCB (du deuxième et du troisième mode de réalisation) est libre. Selon la figure 5a, le connecteur 308 et la tête magnétique 202 sont alignés dans la direction de glissement de la carte magnétique. Cette solution permet d'avoir un lecteur de carte compact. Selon la figure 5c, le connecteur 308 et la tête magnétique 202 sont alignés dans la direction de passage (de « *swipe »* pour l'homme du métier) de la carte à puce (SC). Ce positionnement illustré dans la figure 5c est identique à celui de la figure 4b-2, et permet à la tête magnétique 202 de décharger l'électricité statique de la carte à puce (SC) lors de passage de la carte de puce. En outre, lors de lecture d'une carte magnétique (MC), la carte magnétique (MC) n'entre pas dans la zone du connecteur de carte à puce 308. Dans la figure 5b, la tête magnétique 202 et le connecteur de carte à puce 308 sont alignés selon une ligne (L) qui forme un angle aigu avec la direction d'insertion de carte à puce. Ce positionnement permet d'avoir un lecteur de carte hydride relativement compact et muni de la fonction de déchargement de l'électricité statique de carte à puce.

La figure 6a illustre une tête magnétique de l'état de la technique. La surface supérieure de la tête magnétique présente une forme cintrée. Lors de la lecture d'une carte magnétique, la carte magnétique passe dans le sens A-A' illustré en relation avec la figure 6a. Les figures 6b et 6c illustre respectivement une vue en coupe de la tête magnétique dans le sens de passage (A-A') de la carte magnétique et une vue en coupe de la tête magnétique dans le sens (B-B') perpendiculaire au sens de passage (A-A') de la carte magnétique. Le sommet de la vue en coupe selon la figure 6b présente la forme d'un arc. À la différence de la vue en coupe selon la figure 6b, le sommet de la vue en coupe de la figure 6c est plat. Par conséquence, lors de la lecture d'une carte magnétique comme illustrée en relations avec les figures 4c-1 et 6a-1, la forme d'un arc au sommet permet de guider la carte magnétique (MC) et amortir le choc grâce à l'élasticité de la carte (MC). Cependant, dans le cas où la tête magnétique et un connecteur de carte à puce sont alignés selon la direction de passage de carte à puce (comme illustré en relation avec la figure 4b-1), la carte à puce (SC) entre en contact avec une surface abrupte (figure 6c-1) de la tête magnétique. Ce contact peut entrainer un choc et bloquer voire casser la carte à puce. La technique proposée concerne également une tête magnétique dont la surface supérieure est sensiblement en forme de dôme et ce dans tous les sens de passage. Par conséquent, les vues en coupe dans de la tête dans toutes les directions présentent toujours la forme d'un arc au sommet.

Ainsi, la tête magnétique selon la technique proposée permet aussi de faciliter le passage d'une carte dans un sens différent de celui pour la lecture d'une carte magnétique.

## Revendications

1. Lecteur de carte (20, 30, 40) comprenant une carte de circuit imprimé (201), une tête magnétique (202) et un connecteur (308) de carte à puce, ladite tête magnétique et ledit connecteur de carte à puce partageant un volume opératoire commun de lecture de carte, ledit lecteur étant **caractérisé en ce que** ladite carte de circuit imprimé (201) comprend une ouverture (203) au sein de laquelle ladite tête magnétique (202) est mobile entre une position de repos, dans laquelle la tête magnétique n'est pas sollicitée, et une position de lecture, dans laquelle la tête magnétique est déplacée dans ladite ouverture.

2. Lecteur de carte (20, 30, 40) selon la revendication 1, **caractérisé en ce qu'**en position de lecture, ladite tête magnétique (202) occupe une partie du volume dédié au déplacement d'une carte à puce.

3. Lecteur de carte (20, 30, 40) selon la revendication 1, **caractérisé en ce qu'**en position de lecture, une partie de la tête magnétique prend place au sein d'une enceinte sécurisée de protection dudit connecteur de carte à puce.

4. Lecteur de carte (20, 30, 40) selon la revendication 1, **caractérisé en ce que** ladite tête magnétique et ledit connecteur de carte à puce partagent au moins en partie une même fente d'insertion de carte.

5. Lecteur de carte (20, 30, 40) selon la revendication 1, **caractérisé en ce qu'**il comprend un circuit imprimé flexible (206), ledit circuit imprimé flexible (206) raccordant ladite tête magnétique (202) à ladite carte de circuit imprimé (201).

6. Lecteur de carte (20, 30, 40) selon la revendication 1, **caractérisé en ce qu'**il comprend au moins un élément de support (204) maintenant ladite tête magnétique (202) dans l'ouverture (203) de ladite carte de circuit imprimé (201) qui est conformé pour permettre une translation de la tête magnétique (202) dans ladite ouverture (203) selon une direction perpendiculaire à ladite carte de circuit imprimé (201).

7. Lecteur de carte (20, 30, 40) selon la revendication 1, **caractérisé en ce que** ledit connecteur (308) comprend une première surface supérieure de contact et ladite tête magnétique (202) comprend une deuxième surface supérieure (2021) de lecture, ladite première surface supérieure de contact et ladite deuxième surface supérieure de lecture étant situées dans un même côté de ladite carte de circuit imprimé.

8. Lecteur de carte (20, 30, 40) selon la revendication 1, **caractérisé en ce que** ledit connecteur (308) comprend une première surface supérieure de contact et ladite tête magnétique (202) comprend une deuxième surface supérieure de lecture (2021), ladite première surface supérieure de contact et ladite deuxième surface supérieure de lecture étant situé sur des faces opposées de ladite carte de circuit imprimé.

9. Lecteur de carte (20, 30, 40) selon la revendication 8, **caractérisé en ce que** l'orientation de la lecture d'une carte à puce est perpendiculaire à l'orientation de la lecture d'une carte magnétique.

10. Terminal de paiement amovible **caractérisé en ce qu'**il comprend un lecteur de carte (20, 30, 40) selon une quelconque des revendications précédentes.

## Patentansprüche

1. Kartenleser (20, 30, 40) mit einer Leiterplatte (201), einem Magnetkopf (202) und einem Chipkarten-Verbinder (308), wobei der Magnetkopf und der Chipkarten-Verbinder sich ein gemeinsames operatives Kartenlesevolumen teilen, wobei der Leser **dadurch gekennzeichnet ist, dass** die Leiterplatte (201) eine Öffnung (203) aufweist, in welcher der Magnetkopf (202) zwischen einer Ruheposition, in welcher der Magnetkopf nicht beansprucht wird, und einer Leseposition, in welcher der Magnetkopf in der Öffnung bewegt wird, beweglich ist.

2. Kartenleser (20, 30, 40) nach Anspruch 1, **dadurch gekennzeichnet, dass** der Magnetkopf (202) in Leseposition einen Teil des für das Bewegen einer Chipkarte bestimmten Volumens einnimmt.

3. Kartenleser (20, 30, 40) nach Anspruch 1, **dadurch gekennzeichnet, dass** ein Teil des Magnetkopfes in Leseposition innerhalb einer gesicherten Schutzumrandung des Chipkarten-Verbinders angeordnet ist.

4. Kartenleser (20, 30, 40) nach Anspruch 1, **dadurch gekennzeichnet, dass** der Magnetkopf und der Chipkarten-Verbinder sich mindestens teilweise ein und denselben Kareneinführungsschlitz teilen.

5. Kartenleser (20, 30, 40) nach Anspruch 1, **dadurch gekennzeichnet, dass** er eine flexible gedruckte Schaltung (206) aufweist, wobei die flexible gedruckte Schaltung (206) den Magnetkopf (202) mit der Leiterplatte (201) verbindet.

6. Kartenleser (20, 30, 40) nach Anspruch 1, **dadurch gekennzeichnet, dass** er mindestens ein Stützelement (204) aufweist, das den Magnetkopf (202) in der Öffnung (203) der Leiterplatte (201) haltert, welches ausgestaltet ist, um eine Verschiebung des Magnetkopfes (202) in der Öffnung (203) in einer senkrecht zur Leiterplatte (201) verlaufenden Richtung zu ermöglichen.

7. Kartenleser (20, 30, 40) nach Anspruch 1, **dadurch gekennzeichnet, dass** der Verbinder (308) eine erste obere Kontaktfläche aufweist und der Magnetkopf (202) eine zweite obere Lesefläche (2021) aufweist, wobei die erste obere Kontaktfläche und die zweite obere Lesefläche auf ein und derselben Seite der Leiterplatte angeordnet sind.

8. Kartenleser (20, 30, 40) nach Anspruch 1, **dadurch gekennzeichnet, dass** der Verbinder (308) eine erste obere Kontaktfläche aufweist und der Magnetkopf (202) eine zweite obere Lesefläche (2021) aufweist, wobei die erste obere Kontaktfläche und die zweite obere Lesefläche auf gegenüberliegenden Seiten der Leiterplatte angeordnet sind.

9. Kartenleser (20, 30, 40) nach Anspruch 8, **dadurch gekennzeichnet, dass** die Lese-Ausrichtung einer Chipkarte senkrecht zur Lese-Ausrichtung einer Magnetkarte ist.

10. Abnehmbares Zahlungsendgerät, **dadurch gekennzeichnet, dass** es einen Kartenleser (20, 30, 40) nach einem beliebigen der vorhergehenden Ansprüche umfasst.

## Claims

1. Card reader (20, 30, 40) comprising a printed circuit board (201), a magnetic head (202) and a smart card connector (308), said magnetic head and said smart card connector sharing a common operating volume for card reading, said reader being **characterized in that** the printed circuit board (201) comprises an opening (203) within which said magnetic head (202) is mobile between an idle position, wherein the magnetic head is not solicited, and a reading position, wherein the magnetic head is moved in said opening.

2. Card reader (20, 30, 40) according to claim 1, **characterised in that** in reading position, said magnetic head (202) occupies a portion of the volume dedicated to the displacement of a smart card.

3. Card reader (20, 30, 40) according to claim 1, **characterised in that** in reading position, a portion of the magnetic head takes up space within a secure protective enclosure of said smart card connector.

4. Card reader (20, 30, 40) according to claim 1, **characterised in that** said magnetic head and said smart card connector share at least partially the same card insertion slot.

5. Card reader (20, 30, 40) according to claim 1, **characterised in that** it comprises a flexible printed circuit (206), said flexible printed circuit (206) connecting said magnetic head (202) to said printed circuit board (201) .

6. Card reader (20, 30, 40) according to claim 1, **characterised in that** it comprises at least one support element (204) that maintains said magnetic head (202) in the opening (203) of said printed circuit board (201) which is shaped to allow for a translation of the magnetic head (202) in said opening (203) according to a direction perpendicular to said printed circuit board (201) .

7. Card reader (20, 30, 40) according to claim 1, **characterised in that** said connector (308) comprises a first upper contact surface and said magnetic head (202) comprises a second upper reading surface (2021), said first upper contact surface and said second upper reading surface being located on a same side of said printed circuit board.

8. Card reader (20, 30, 40) according to claim 1, **characterised in that** said connector (308) comprises a first upper contact surface and said magnetic head (202) comprises a second upper reading surface (2021), said first upper contact surface and said second upper reading surface being located on opposite sides of said printed circuit board.

9. Card reader (20, 30, 40) according to claim 8, **characterised in that** the orientation of the lecture of a smart card is perpendicular to the orientation of the lecture of a magnetic card.

10. Removable payment terminal **characterised in that** it comprises a card reader (20, 30, 40) according to any of the preceding claims.
